# EUROPÄISCHE PATENTSCHRIFT

(11) **EP 2 674 311 B1**
(45) Veröffentlichungstag und Bekanntmachung des Hinweises auf die Patenterteilung: **08.08.2018**
(21) Anmeldenummer: 13171752.2
(22) Anmeldetag: 12.06.2013
(51) Int. Cl.: B60J 5/04

(54) **Distanzeinrichtung zum Stapeln von identisch geformten Kunststoffformteilen**
Spacer device for stacking of identical shaped plastic moulded parts
Dispositif d'écartement pour l'empilement de pièces moulées en matière plastique formées de façon identique

(30) Priorität: 13.06.2012 DE 202012102178 U
(43) Veröffentlichungstag der Anmeldung: 18.12.2013
(73) Patentinhaber: Carcoustics TechConsult GmbH, 51381 Leverkusen (DE)
(72) Erfinder: Geissler, Richard, 6912 Hoerbranz (AT); Kopf, Johannes, 6832 Sulz (AT); Luger, Markus, 6845 Hohenems (AT)
(74) Vertreter: Patentanwälte Bauer Vorberg Kayser

(56) Entgegenhaltungen:
- EP-A1- 0 737 602
- EP-A1- 1 426 239
- EP-A1- 1 859 978
- FR-A1- 2 952 044
- US-A- 5 927 020
- US-A1- 2002 180 236
- US-A1- 2005 016 942
- US-A1- 2006 170 242
- US-A1- 2008 073 933
- US-A1- 2009 322 118

## Beschreibung

Die Erfindung betrifft einen Stapel aus wenigstens zwei identisch geformten, flächigen Kunststoffformteilen gemäß dem Oberbegriff des Anspruchs 1.

Zwischen dem Türaußenblech und der Innenverkleidung einer Fahrzeugtür werden üblicherweise diverse Komponenten wie Fensterheber, Türöffnungs- und Türschließmechanismen, Lautsprecher, Airbags, etc. untergebracht. Dazu ist im Türinnenblech oftmals eine fensterartige Montageöffnung vorgesehen, in welche diese Komponenten auf einem vormontierten Aggregatträger eingebaut werden können. Dieser Aggregatträger kann ein selbsttragendes Kunststoffformteil sein, das mit den verschiedenen Komponenten bestückt wird. Dazu sind in dem Kunststoffformteil Erhebungen bzw. Vertiefungen vorgesehen, um die Komponenten an den vorgesehenen Positionen zu montieren, und der Aggregatträger wird so montiert, dass er die Montageöffnung im Türinnenblech abdeckt und feuchtigkeitsdicht verschließt.

Nach der Montage des Aggregatträgers muss das Kunststoffformteil somit gegen das Türinnenblech abgedichtet sein, damit keine Feuchtigkeit in die Innenverkleidung gelangen kann. Zur Herstellung einer solchen Dichtung ist es bekannt, auf der Montageseite des verwendeten Kunststoffformteils am Rand eine umlaufende Butyldichtung aufzubringen. Dies geschieht vorzugsweise mittels eines Roboters, der die erwärmte Butyldichtung in Form einer Dichtungsraupe auf den Rand aufbringt. Das Material kann gut aus einer Düse aufgebracht werden, wobei auch kleine Radien in den Ecken des Kunststoffformteils realisiert werden können. Als Klebematerial kann beispielsweise ein Schmelzklebestoff wie Hotmelt verwendet werden, der erwärmt und durch eine Düse in dem gewünschten Dichtbereich des Kunststoffformteils aufgebracht wird.

Das Gleiche gilt auch für andere Kunststoffformteile, die mittels einer umlaufenden Kleberaupe gegen ein Fahrzeugbauteil angedichtet werden. Beispielsweise ist dies auch für Schallisolationen der Fall, die an einer Fahrzeugtür montiert werden.

Nach der Aufbringung der Dichtungsraupe auf ein Kunststoffformteil ist ihre Oberfläche klebend, so dass sie für Transport und Lagerung des Kunststoffbauteils mit einer Schutzfolie abgedeckt werden muss. Dabei wird entweder nur die Dichtungsraupe mit einem schmalen Abdeckstreifen abgedeckt, oder das gesamte Kunststoffformteil wird mit einer Schutzfolie bedeckt, die dann an der Dichtungsraupe haftet. Vor der Montage des Kunststoffformteils an einem Fahrzeugbauteil wird die jeweilige Schutzfolie entfernt und bei der Montage wird die Dichtungsraupe an das Fahrzeugbauteil gedrückt und haftet an diesem. So entsteht eine flüssigkeitsdichte Verbindung zwischen dem Kunststoffformteil und beispielsweise einem Türinnenblech.

Aus der EP 1 859 978 A1 ist beispielsweise ein Kunststoffbauteil bekannt, das zur Anbringung innerhalb einer Fahrzeugtür geeignet ist, wobei das Kunststoffbauteil ein oder mehrere Kleberaupen aufweist. Im Bereich dieser Kleberaupe/n und auch im mittleren Bereich des Bauteils sind verschieden geformte Erhebungen vorgesehen, mit denen ein solches Kunststoffbauteil beim Stapeln mit anderen gleichartigen Kunststoffbauteilen auf Abstand zu dem jeweils anderen Bauteil gehalten wird.

Aus der EP 1 426 239 A1 ist weiterhin eine Dichtungs- und Schalldämpfungsplatte zur Anbringung innerhalb einer Fahrzeugtür bekannt, bei der auf der gegenüberliegenden Seite einer Kleberaupe ein Rahmen angebracht ist. Dieser Rahmen ist beispielsweise über Schrauben durch die Platte hindurch mit dem Blech der Fahrzeugtür verbindbar und drückt die Kleberaupe so an die Fahrzeugtür. Ferner kann der Rahmen Erhebungen und/oder Wölbungen aufweisen, um auf diese Weise sicherzustellen, dass die Kleberaupe beim Stapeln mehrerer Platten nicht in Kontakt mit einer angrenzenden Platte kommt.

Eine weitere aus dem Stand der Technik bekannte Dichtungs- und Schalldämpfungsplatte zur Anbringung innerhalb einer Fahrzeugtür offenbart die FR 2 952 044 A1. Diese weist auf einer Seite eine umlaufende Kleberaupe auf. Die Platte weist innerhalb des durch die Kleberaupe umgrenzten Bereiches mehrere Dome auf, welche beim Stapeln mehrerer Platten bewirken, dass die Kleberaupen nicht von angrenzenden Platten berührt werden. Dabei haben die Dome unterschiedliche Positionen, so dass sie versetzt zueinander liegen, wenn die Platten gestapelt werden, wodurch die Außenkante eines Domes jeweils auf der Fläche eines anderen Domes zum Liegen Der Stapel der FR 2 952 044 A1 entspricht dem Oberbegriff des Anspruchs 1. Aufgrund der Erwärmung des jeweiligen Dichtungsmaterials für dessen Aufbringung ist jedoch eine bestimmte Abkühlzeit erforderlich, bevor das Kunststoffformteil transportiert und gelagert werden kann. Üblicherweise werden dazu mehrere Kunststoffformteile übereinander gestapelt, wodurch die Dichtungen verformt und beschädigt werden können, wenn sie noch zu weich sind. Die erforderliche Abkühlzeit vor dem Stapeln kann sich somit nachteilig auf die Taktzeit bei der Herstellung der Kunststoffformteile auswirken. Ferner kann es trotz vorheriger Abkühlung bei Transport und Lagerung der Kunststoffformteile zu Beschädigungen der Dichtungsraupe kommen, was sich negativ auf die Dichtungseigenschaften auswirkt.

Darüber hinaus ist die Aufbringung einer streifenförmigen Schutzfolie auf die klebende Oberseite einer Dichtungsraupe aufwendig, während die Aufbringung einer größeren Schutzfolie auf dem gesamten Kunststoffformteil zwar einfacher ist, jedoch einen hohen Bedarf an Schutzfolienmaterial mit sich bringt, das dann entsorgt werden muss. Dies wiederum ist unter Umweltschutz- und Kostenaspekten nachteilig.

Aufgabe der Erfindung ist es daher, alternative Mittel bereitzustellen, die beim Stapeln von derartigen identisch geformten Kunststoffformteilen eine Beschädigung von Dichtungsraupen auf den Kunststoffformteilen verhindern.

Erfindungsgemäß wird diese Aufgabe durch einen Stapel aus wenigstens zwei identisch geformten, flächigen Kunststoffformteilen gemäß dem unabhängigen Anspruch 1 gelöst. Vorteilhafte Weiterbildungen des Stapels ergeben sich aus den Unteransprüchen 2-7.

Der erfindungsgemäße Stapel eignet sich folglich zum Stapeln von wenigstens zwei identisch geformten, flächigen Kunststoffformteilen mit einer Kontur, die durch wenigstens eine Erhebung gebildet wird, die auf der anderen Seite eines jeweiligen Kunststoffformteils eine entsprechende Vertiefung ausbildet. Dabei ist am Rand jedes Kunststoffformteils wenigstens eine umlaufende Kleberaupe (Dichtungsraupe) angebracht, mit welcher die Kunststoffformteile jeweils bei Anbringung an einem Fahrzeugbauteil gegenüber diesem abdichtbar sind. Zwischen den wenigstens zwei Kunststoffformteilen ist eine Distanzeinrichtung angeordnet, die wenigstens zwei Distanzelemente aufweist und so ausgebildet und zwischen den zwei Kunststoffformteilen positioniert ist, dass die Distanzelemente in Kontakt zu beiden Kunststoffformteilen stehen, und Höhe, Form und/oder Anordnung der wenigstens zwei Distanzelemente so gewählt sind, dass sich die beiden Kunststoffformteile nicht berühren, und die Kleberaupe eines unteren Kunststoffformteils nicht das darüber gestapelte Kunststoffformteil berührt. Dabei liegt wenigstens ein erstes Distanzelement in einem Außenbereich der Kunststoffformteile nahe der Kleberaupe, während wenigstens ein zweites Distanzelement in einem mittleren Bereich der Kunststoffformteile liegt, wobei die Distanzeinrichtung mit den wenigstens zwei Distanzelementen ein separates Bauteil ist, das als Zwischenlage zwischen den zwei Kunststoffformteilen eingebracht ist.

Erfindungsgemäß ist vorgesehen, dass die Zwischenlage eine Kontur aufweist, die der Kontur der gestapelten Kunststoffformteile entspricht, so dass die Erhebung(en)/Vertiefung(en) der Zwischenlage die Erhebung(en)/Vertiefung(en) der der gestapelten Kunststoffformteile entsprechen. Weiterhin ist erfindungsgemäß vorgesehen, dass die wenigstens zwei Distanzelemente aus dieser Kontur herausragen und dass der durch Einbringung der Distanzeinrichtung erzeugte Abstand zwischen den beiden Kunststoffformteilen wenigstens der Summe aus der Materialdicke der Zwischenlage und der Höhe der aus der Kontur herausragenden Distanzelemente entspricht.

Durch den erfindungsgemäßen Stapel wird das Stapeln von wenigstens zwei identisch geformten, flächigen Kunststoffformteilen ermöglicht, ohne dass die darauf angebrachten Kleberaupen beschädigt werden, indem die beiden Kunststoffformteile durch die Distanzelemente in einem vorgegebenen Abstand zueinander gehalten werden. Hierdurch entfallen komplizierte und aufwendige Kleberaupenabdeckungen aus beschichteter Folie oder Papier, was wiederum zu einer Abfallreduktion und Kosteinsparung führt.

Insbesondere dient wenigstens ein erstes Distanzelement nahe der Kleberaupe dazu, in diesem sensiblen Bereich den erforderlichen Abstand zwischen zwei Kunststoffformteilen sicherzustellen. Wenigstens ein weiteres zweites Distanzelement im mittleren Bereich der Kunststoffformteile dient dagegen dazu, ein Durchhängen eines oberen Kunststoffformteils zu verhindern. Da die Kleberaupen am Außenrand der Kunststoffformteile angebracht sind, könnten ausschließlich Distanzelemente in diesem Randbereich ansonsten zu einem Durchhängen im mittleren Bereich führen.

Dabei muss ein zweites Distanzelement, das auch als Stützelement bezeichnet werden kann, beim Stapeln nicht genau in der Mitte eines Kunststoffformteils liegen, sondern hierdurch wird für diese Erfindung lediglich ein mittlerer Bereich im Gegensatz zum einem äußeren Randbereich bezeichnet. Dabei können auch mehrere zweite Distanzelemente vorgesehen sein, die geeignet in diesem mittleren Bereich verteilt sind. Vorzugsweise ist der durch die Distanzeinrichtung erzeugte Abstand zwischen den beiden Kunststoffformteilen dann über die Kontur der Kunststoffformteile annähernd konstant, wobei der Abstand nicht exakt konstant sein muss, sondern auch leichte Abweichungen im Millimeterbereich von der Erfindung umfasst sind.

Die ersten und zweiten Distanzelemente können jegliche Formen annehmen, wobei sich Elemente wie Stege, Stifte, Rippen, Profile oder Kombinationen davon als vorteilhaft erwiesen haben. Auch die Anordnung der Distanzelemente kann geeignet gewählt werden. Bei außerhalb liegenden ersten Distanzelementen könnten diese die Kleberaupe je nach Ausformung der Distanzelemente auch gegen Beschädigungen von der Seite schützen. Da der Abstand zwischen dem Außenrand der Kunststoffformteile und der Kleberaupe jedoch oftmals nur sehr klein ist, kann es vorteilhaft sein, die Distanzelemente innerhalb der Kleberaupe nahe an dieser anzuordnen.

Der Abstand zwischen der Kleberaupe und den ersten Distanzelementen kann beispielsweise in der Größenordnung von 0,2 mm bis 2cm liegen. Er sollte groß genug sein, um die Distanzelemente beim Stapeln mehrerer Kunststoffformteile sicher im Bereich der Kleberaupe positionieren zu können, ohne dass die Distanzelemente die Kleberaupe berühren. Allerdings sollte er auch nicht zu groß sein, da die Distanzelemente ansonsten in dem sensiblen Bereich der Kleberaupen keine ausreichende Abstands- bzw. Stützwirkung entfalten können.

Erfindungsgemäß ist die Distanzeinrichtung mit den wenigstens zwei Distanzelementen ein separates Bauteil, das als Zwischenlage zwischen den zwei Kunststoffformteilen eingebracht ist. Hierdurch stellt die Distanzeinrichtung ein wiederverwendbares Bauteil dar, das beim Stapeln zwischen zwei Kunststoffformteile gelegt und anschließend wieder entfernt wird, um es dann für einen neuen Stapel zu verwenden. Die Wiederverwendbarkeit ist unter Umweltaspekten sehr vorteilhaft und führt über die Laufzeit auch zu einer Kosteinsparung gegenüber Lösungen mit Einmalabdeckungen aus Folie oder Papier.

Als Material für die Zwischenlage kommen auf Polyolefinen basierende Dünn- und Dickschichtfolien sowie geschlossenzellige Schaumfolien und Platten in Betracht. Dabei können beispielsweise Schaumblöcke und insbesondere Hartchäume aus Polyethylen oder Polyethylenterephthalat zur Anwendung kommen. Es kann sich ferner um leicht offenporige Materialien wie beispielsweise höher dichte Schäume oder vorverdichtete EPP- und PEPP-Plattenware (expandiertes Polypropylen und poröses expandiertes Polypropylen) handeln. Insbesondere können geschlossenzellige Schaumfolien aus Polyethylen (PE-Schaumfolien) eingesetzt werden. Als Herstellungsprozess bietet sich das Tiefziehen an, und das Design der Zwischenlage als Distanz- und Stützhalter kann dabei in einem "One Shot"-Prozess gefertigt werden.

Die Zwischenlage kann wie die Kunststoffformteile eine annähernd konstante Materialdicke haben. Dabei weist die Zwischenlage eine Kontur auf, die der Kontur der zu stapelnden Kunststoffformteile entspricht oder ihr zumindest ungefähr folgt, wobei die wenigstens zwei Distanzelemente aus dieser Kontur herausragen. Der durch Einbringung der Distanzeinrichtung erzeugte Abstand zwischen den beiden Kunststoffformteilen entspricht dann wenigstens der Summe aus der Materialdicke der Zwischenlage und der Höhe der aus der Kontur herausragenden Distanzelemente. Beispielsweise kann die Materialdicke der Zwischenlage in der Größenordnung von 2-10mm und insbesondere bei 5mm liegen, während der zu erreichende Sollabstand in der Größenordnung von 10mm-30mm liegt, so dass die Höhe der Distanzelemente entsprechend gewählt werden muss.

Dies hat den Vorteil, dass eine möglichst dünne und leichte Zwischenlage gewählt werden kann, die einfach zwischen zwei Kunststoffformteile legbar ist. Da diese üblicherweise nicht ausreichen würde, um einen ausreichend großen Abstand zwischen zwei Kunststoffformteilen herzustellen, ragen zusätzlich die Distanzelemente aus der Kontur dieser Zwischenlage heraus und bewirken so den erforderlichen Abstand und gegebenenfalls auch eine Ausrichtung von Kunststoffformteilen gegeneinander. Da die Kontur der Zwischenlage jedoch bis auf die Distanzelemente der Kontur der zu stapelnden Kunststoffformteile folgt, erleichtert dies den Stapel- und Ausrichtvorgang, und die Kunststoffformteile können nach wie vor möglichst platzsparend gestapelt werden.

In einer Variante der Erfindung ist der Umfang der Zwischenlage kleiner als der Umfang der Kunststoffformteile, so dass eine Zwischenlage bei mittiger Einbringung zwischen zwei Kunststoffformteile nicht nach außen über eine Kleberaupe hinausragt. Die Distanzeinrichtung ist dann vollständig innerhalb eines durch die umlaufende Kleberaupe begrenzten Bereichs einzubringen. Wenigstens ein nahe an der Kleberaupe liegendes erstes Distanzelement hebt dann das obere Kunststoffformteil so weit an, dass seine Unterseite nicht in Berührung mit der darunterliegenden Kleberaupe kommt.

Es kann jedoch auch vorgesehen sein, dass das wenigstens eine erste Distanzelement so innerhalb des durch die umlaufende Kleberaupe gebildeten Bereichs eines Kunststoffformteils liegt, dass die Zwischenlage nach außen über eine Kleberaupe hinausragt, ohne sie jedoch zu berühren. So kann die Kleberaupe zusätzlich gegen Druck von oben auf das Kunststoffformteil geschützt werden. Dabei kann der Umfang der Zwischenlage in etwa dem Umfang der Kunststoffformteile entsprechen oder etwas kleiner sein. Er kann sogar größer sein, so dass die Zwischenlage zwischen den gestapelten Kunststoffformteilen nach außen herausragt. Hierdurch könnte das Entfernen der Zwischenlagen erleichtert werden, da diese so besser an ihrem Rand gegriffen werden können.

Bei einer separaten Distanzeinrichtung als Zwischenlage zwischen zwei Kunststoffformteilen können die Distanzelemente ebenfalls verschiedene Formen und Positionen annehmen. Beispielsweise können am Außenrand der Zwischenlage mehrere erste Distanzelemente in Form von Stegen und/oder Stiften ausgeformt sind. Stege können dabei insbesondere in Form lotrecht auf den Außenrand der Zwischenlage zulaufen.

In einem weiteren Ausführungsbeispiel ist ein erstes Distanzelement im Bereich der Kleberaupe dadurch gebildet, dass der Außenrand der Zwischenlage als L-förmiges oder U-förmiges Profil ausgeformt ist. Der entsprechend ausgeformte Außenrand dient dann selbst als Distanzelement, wobei die Schenkel des gewählten Profils den erforderlichen Abstand bewirken.

Weitere Vorteile, Besonderheiten und zweckmäßige Weiterbildungen der Erfindung ergeben sich aus den Unteransprüchen und der nachfolgenden Abbildungen.

Von den Abbildungen zeigt:
- Fig. 1: einen Querschnitt durch den unteren Bereich einer Kraftfahrzeugtür mit einem montierten Kunststoffformteil;
- Fig. 2a: einen Querschnitt durch ein Ausführungsbeispiel eines zu stapelnden Kunststoffformteils;
- Fig. 2b: eine Aufsicht auf ein Ausführungsbeispiel eines zu stapelnden Kunststoffformteils;
- Fig. 3: einen Querschnitt durch ein Ausführungsbeispiel eines Stapels enthaltend zwei Kunststoffformteile;
- Fig. 4: einen Querschnitt durch eine erste Ausführungsform des erfindungsgemäßen Stapels;
- Fig. 5: einen Querschnitt durch eine zweite Ausführungsform des erfindungsgemäßen Stapels mit einer Distanzeinrichtung mit L-förmigem Randbereich;
- Fig. 6: einen Querschnitt durch eine dritte Ausführungsform des erfindungsgemäßen Stapels mit einer Distanzeinrichtung mit U-förmigem Randbereich und einem ausrichtenden Distanzelement;
- Fig. 7a: eine schematische Aufsicht auf eine separate Zwischenlage mit einem U-förmigen Randbereich und mehreren Rippen;
- Fig. 7b: einen vergrößerten Ausschnitt aus einem U-förmigen Randbereich mit Rippe gemäß Fig. 7a; und
- Fig. 8: eine schematische Aufsicht auf ein Kunststoffformteil mit aufgelegter Zwischenlage.

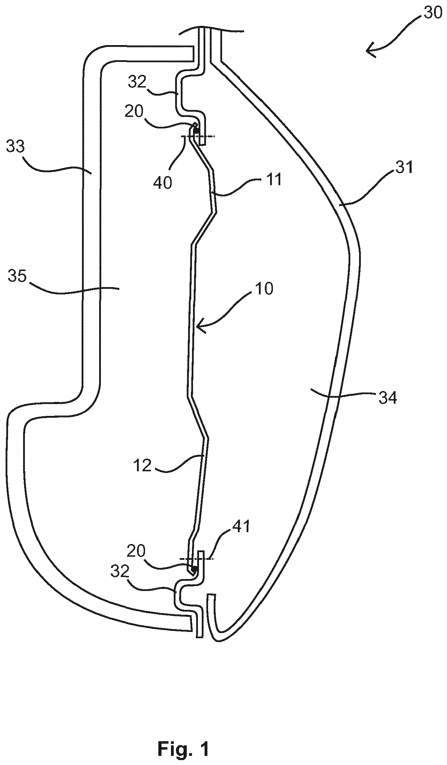

Anhand der Fig. 1 soll exemplarisch die Anbringung eines Kunststoffformteils an einer Fahrzeugtür mittels einer Klebedichtung erläutert werden. Hierbei handelt es sich um ein mögliches Beispiel eines Kunststoffformteils, bei dem mehrere Kunststoffformteile vor der Fixierung an einem Fahrzeugbauteil gestapelt werden. Die Erfindung kann jedoch auch zum Stapeln anderer Kunststoffformteile verwendet werden, die an einem Fahrzeugbauteil angebracht werden und mittels einer umlaufenden Kleberaupe gegenüber diesem abgedichtet werden. Insbesondere kann es sich um Schallisolierungen an Fahrzeugtüren handeln.

Fig. 1 zeigt den unteren Bereich einer Kraftfahrzeugtür 30 in einem Querschnitt mit einem Türaußenblech 31 und einem Türinnenblech 32. In dem Türinnenblech 32 ist ein fensterförmiger Montageausschnitt ausgeformt, in den ein Aggregatträger mit vormontierten Komponenten wie Fensterheber, Türöffnungs- und Türschließmechanismen, Lautsprecher, Airbags, etc. untergebracht wird. Dazu ist als Aggregatträger ein Kunststoffformteil 10 vorgesehen, auf welchem die Komponenten vormontiert werden können, wobei diese Komponenten in der Fig. 1 nicht dargestellt sind, sondern lediglich der Träger in Form des Kunststoffformteils 10. Das Kunststoffformteil 10 weist dazu üblicherweise Erhebungen bzw. Vertiefungen zur Aufnahme der einzelnen Komponenten auf, wie es in Fig. 1 schematisch in Form von Vertiefungen/Erhebungen 11 und 12 dargestellt ist.

Das Kunststoffformteil 10 ist mittels Befestigungen 40 und 41 an dem Türinnenblech 32 montiert, wobei es sich jedoch um mehr als die zwei dargestellten Befestigungen handeln kann. Die Befestigungen können auf verschiedene Weise ausgebildet sein, wobei beispielsweise Laschen, Stift- und Clipsverbindungen bekannt sind. Dabei können die Befestigungen 40, 41 innerhalb und/oder außerhalb einer umlaufenden Dichtung 20 positioniert sein.

Die Dichtung 20 ist in Form einer umlaufenden Kleberaupe ausgeführt, welche das Kunststoffformteil 10 nach der Montage gegen das Türinnenblech 32 abdichtet. So entsteht zwischen dem Türinnenblech 32 zusammen mit dem Kunststoffformteil 10 und dem Türaußenblech 31 ein Nassraum 34. In diesen Nassraum 34 kann Feuchtigkeit eindringen, wenn diese beispielsweise von oben durch den Fensterschacht eindringt. Der Nassraum 34 ist jedoch durch die Dichtungsraupe 20 gegen den Trockenraum 35 abgedichtet, der zusammen mit dem Kunststoffformteil 10 zwischen dem Türinnenblech 32 und der Türinnenverkleidung 33 gebildet wird. So kann keine Feuchtigkeit in den Innenraum des zugehörigen Fahrzeugs eindringen.

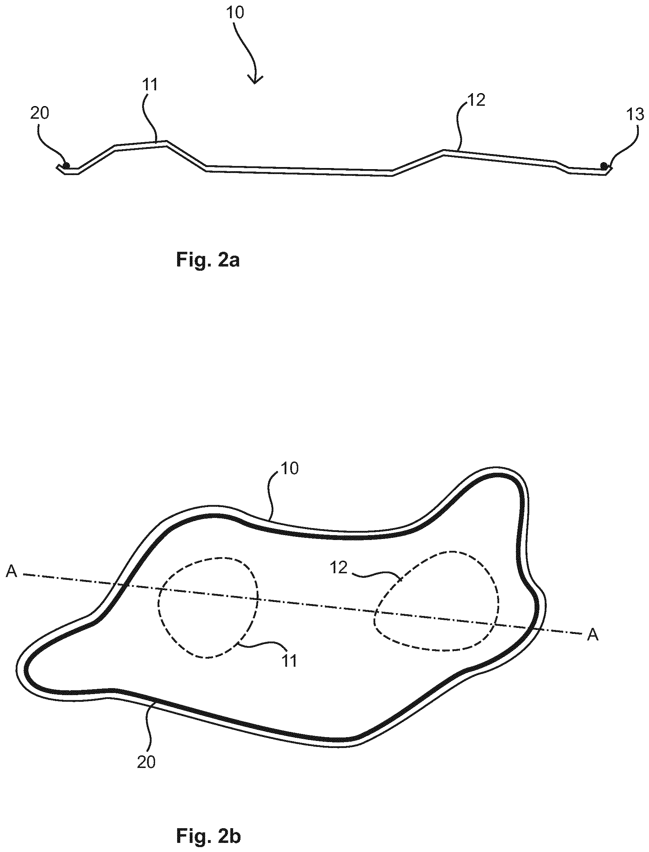

Fig. 2a zeigt einen schematischen Querschnitt durch ein Ausführungsbeispiel eines solchen Kunststoffformteils 10 mit einer Kontur, die in dem geschnittenen Bereich zwei Erhebungen bzw. Vertiefungen 11 und 12 vorsieht. Die Materialdicke des Kunststoffformteils 10 ist vorzugsweise in allen Bereichen annähernd konstant, wobei unter konstant im Sinne dieser Erfindung zu verstehen ist, dass die Kontur des Kunststoffformteils 10 mit wenigstens einer Erhebung bzw. Vertiefung keine gezielten Materialverdickungen oder Materialverjüngungen beinhaltet, sondern durch eine entsprechende Formgebung erzeugt wird. Materialverdickungen oder Materialverjüngungen können sich aber durch die Fertigung des Kunststoffformteils beispielsweise in Ecken und Biegungen ergeben, oder wenn einzelne Stellen aus Stabilitätsgründen verdickt ausgeführt sind. Jede Erhebung auf einer Seite eines Kunststoffformteils 10 bedeutet jedoch üblicherweise gleichzeitig eine entsprechende Vertiefung auf der anderen Seite des Kunststoffformteils 10. Werden mehrere dieser Kunststoffformteile übereinandergestapelt, würde sich somit jeweils eine Erhebung in eine entsprechende Vertiefung des angrenzenden Kunststoffformteils einfügen.

Im Randbereich des Kunststoffformteils 10 ist vorzugsweise eine umlaufende Randerhebung 13 ausgeformt, um eine ebenfalls umlaufende Dichtungsraupe 20 auf dem Kunststoffformteil 10 zu halten. Wird das Kunststoffformteil 10 bei der Anbringung an einem Fahrzeugbauteil gegen dieses gedrückt, kann so das Dichtungsmaterial nicht nach außen entweichen. Durch die Randerhebung 13 wird auch die Aufbringung der Dichtungsraupe 20 erleichtert. Ergänzend kann vorgesehen sein, dass die Dichtungsraupe 20 in eine Rinne eingebracht wird, so dass die Dichtungsraupe 20 zu beiden Seiten von der Rinne begrenzt wird.

Fig. 2b zeigt ebenfalls nur schematisch eine Aufsicht auf ein Ausführungsbeispiel eines solchen Kunststoffformteils 10, auf dessen Randbereich eine umlaufende Dichtungsraupe 20 aufgebracht ist. Der Umriss des Kunststoffformteils 10 kann dabei beliebig ausgeformt sein, und die Dichtungsraupe 20 folgt diesem Umriss im Wesentlichen. Beispielsweise kann es sich um einfache Formen wie Rechtecke oder Ovale handeln, der Umriss kann jedoch auch ungleichmäßig ausgeformt sein und mehrere Aus- bzw. Einbuchtungen aufweisen, wie es im Ausführungsbeispiel der Fig. 2b der Fall ist. Dabei sind Erhebungen bzw. Vertiefungen innerhalb der Fläche des Kunststoffformteils 10 an verschiedenen Stellen ausgebildet und in Fig. 2b gestrichelt dargestellt. Beispielsweise würde ein Schnitt A-A durch die Erhebungen/Vertiefungen 11 und 12 in etwa zur Darstellung der Fig. 2a führen. Diese Erhebungen/Vertiefungen können ebenfalls beliebig ausgeformt sein und auch unterschiedliche Tiefen bzw. Höhen haben.

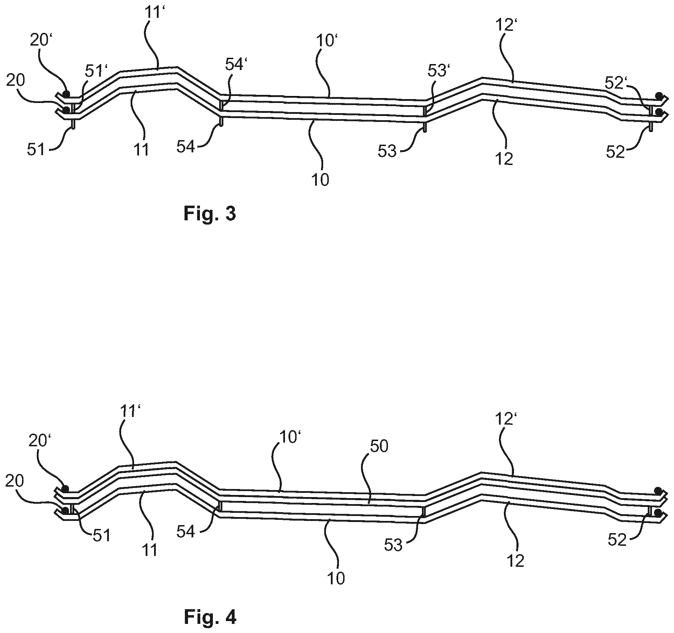

Fig. 3 zeigt einen Querschnitt durch zwei übereinander gestapelte Kunststoffformteile 10 und 10', die mittels Distanzeinrichtungen voneinander beabstandet sind, damit die jeweiligen Dichtungsraupen 20, 20' nicht das jeweils darüberliegende Kunststoffformteil berühren. Dabei sind in den Figuren immer nur zwei gestapelte Kunststoffformteile dargestellt, der Stapel wird jedoch typischerweise durch weitere Kunststoffformteile erhöht.

Die in Fig. 3 gezeigte Distanzeinrichtung ist ein Bestandteil der Kunststoffformteile 10, 10' selbst, so dass die Distanzelemente der Distanzeinrichtung zumindest temporär fest mit den Kunststoffformteilen 10, 10' verbunden sind. Beispielweise sind hierzu an jedem Kunststoffformteil zwei erste Distanzelemente 51, 51' und 52, 52' vorgesehen, die so im Randbereich der Kunststoffformteile 10, 10' liegen, dass sie sich in der Nähe der Dichtungsraupen 20, 20' befinden. Dabei können mehr als zwei Distanzelemente vorgesehen sein, die über den Umfang der Kunststoffformteile 10, 10' verteilt sind.

Die Höhe der ersten Distanzelemente 51, 51', 52, 52' ist so gewählt, dass das obere Kunststoffformteil 10' keinen Kontakt zur Dichtungsraupe 20 des darunterliegenden Kunststoffformteils 10 hat, wenn es mit den Distanzelementen 51' und 52' auf dem unteren Kunststoffformteil 10 aufliegt. Das untere Kunststoffformteil 10 liegt dann mit seinen Distanzelementen 51 und 52 auf dem Boden auf. Vorzugsweise ist der durch die Distanzeinrichtung erzeugte Abstand zwischen zwei Kunststoffformteilen dabei annähernd konstant, so dass ein oberes Kunststoffformteil 10' auch nicht bereichsweise gegenüber einem darunterliegenden Kunststoffformteil 10 durchhängt. Es kann jedoch auch vorgesehen sein, dass der Abstand über die Fläche eines Kunststoffformteils variiert.

Der Abstand zwischen zwei Kunststoffformteilen hängt im Wesentlichen von der Dicke der Dichtungsraupe, 20, 20' ab, aber auch die Kontur und/oder das Material der Kunststoffformteile können ausschlaggebend sein. Können beispielsweise an bestimmten Stellen keine Distanzelemente vorgesehen werden, da diese ansonsten die Funktionsweise eines Kunststoffformteils beinträchtigen würden, besteht die Gefahr, dass ein oberes Kunststoffformteil in diesem Bereich durchhängt. Um auch in diesen Bereichen einen Mindestabstand einhalten zu können, muss die Höhe der einsetzbaren Distanzelemente entsprechend gewählt werden, wobei das bereichsweise Durchhängen einkalkuliert wird.

Dabei können die ersten Distanzelemente 51' und 52' des oberen Kunststoffformteils 10' innerhalb oder außerhalb des durch die Dichtungsraupe 20 begrenzten Bereichs des unteren Kunststoffformteils 10 liegen, wobei es sich jedoch als vorteilhaft erwiesen hat, sie innerhalb anzuordnen, wenn beispielsweise der Bereich zwischen der Dichtungsraupe 20 und dem Außenrand des Kunststoffformteils 10 nur sehr klein ist.

Die ersten Distanzelemente im Bereich der Dichtungsraupen können verschiedene Formen haben, wobei es sich beispielsweise um Stifte, Stege, Rippen, Profile, Dome, etc. handeln kann. Auch Kombinationen aus diesen Grundformen sind möglich. Ferner können diese Distanzelemente auch zu einem durchgehenden Distanzelement miteinander verbunden werden, so dass das obere Kunststoffformteil 10' beispielsweise mit einem umlaufenden Distanzelement auf dem unteren Kunststoffformteil 10 aufliegt.

Ferner sind im mittleren Bereich der Kunststoffformteile 10 und 10' weitere zweite Distanzelemente 53, 53' und 54, 54' vorgesehen, um das obere Kunststoffformteil 10' in diesem Bereich abzustützen und ein Durchhängen zu verhindern. Zwar ist in diesem Bereich üblicherweise keine Dichtungsraupe zu schützen, aber durch die ersten Distanzelemente im Randbereich könnte das obere Kunststoffformteil 10' in diesem mittleren Bereich durchhängen und sich beispielsweise nachteilig verformen. Diese zweiten Distanzelemente 53, 53', 54 und 54' können ebenfalls als Stifte, Stege, Rippen, Profile, Dome, etc. oder Kombinationen aus diesen Grundformen ausgebildet sein und haben vorzugsweise die gleiche Höhe wie die ersten Distanzelemente im Bereich der Kleberaupe. Ferner können auch mehr als die zwei jeweils dargestellten zweiten Distanzelemente vorgesehen sein.

Ferner können insbesondere diese zweiten Distanzelemente 53, 53', 54 und 54' so angeordnet sein, dass sie die beiden Kunststoffformteile 10 und 10' gegeneinander ausrichten. Dazu sind die Distanzelemente 53, 53', 54 und 54' beispielsweise so positioniert, dass sie beim Stapeln genau in den Ecken einer Vertiefung liegen, die zwischen den beiden Erhebungen 11 und 12 gebildet wird, wodurch das obere Kunststoffformteil 10' gegenüber dem unteren Kunststoffformteil 10 nicht nach links oder rechts verrutschen kann. Durch weitere zweite Distanzelemente kann auch ein Verrutschen in andere horizontale Richtungen verhindert werden. Je nach Kontur der Kunststoffformteile und Anordnung der ersten Distanzelemente 51' und 52' im Bereich der Kleberaupe 20 kann dieser Effekt auch durch die ersten Distanzelemente erreicht oder zumindest unterstützt werden.

Einzelne oder alle Distanzelemente können zumindest temporär fest mit dem jeweiligen Kunststoffformteil verbunden sein. Insbesondere können sie integral aus dem Material des Kunststoffformteils ausgeformt sein und auch im montierten Zustand an dem Kunststoffformteil verbleiben. Distanzelemente können jedoch auch lösbar an den Kunststoffformteilen angebracht sein. Dies kann beispielsweise durch einfache Steckverbindungen erfolgen, so dass Distanzelemente entfernt werden können, wenn das Kunststoffformteil an einem Fahrzeugbauteil montiert wird. So haben die Distanzelemente bei und nach der Montage keine störende Wirkung. Dabei ist es ferner möglich, dass Distanzelemente vor der Montage einfach abgebrochen werden können, wozu beispielsweise Sollbruchstellen vorgesehen sind. Erfindungsgemäß ist die Distanzeinrichtung kein Bestandteil der zu stapelnden Kunststoffformteile, sondern ein separates Bauteil, das zum Stapeln zwischen jeweils zwei Kunststoffformteile einbringbar ist. Es handelt sich bei der Distanzeinrichtung also um eine Zwischenlage, die so ausgeformt und mit Distanzelementen versehen ist, dass der gewünschte Sollabstand zwischen den Kunststoffformteilen herstellbar ist. Dabei folgt die Kontur der Zwischenlage im Wesentlichen der Kontur der Kunststoffformteile, und die Distanzelemente ragen zusätzlich aus dieser Kontur heraus. Auch die Materialdicke der Zwischenlage ist daher vorzugsweise in allen Bereichen annähernd konstant, wobei die Kontur der Zwischenlage mit wenigstens einer Erhebung bzw. Vertiefung ebenfalls keine gezielten Materialverdickungen oder Materialverjüngungen beinhaltet, sondern durch eine entsprechende Formgebung erzeugt wird. Jede Erhebung auf einer Seite bedeutet somit auch bei der Zwischenlage gleichzeitig eine entsprechende Vertiefung auf der anderen Seite der Zwischenlage. Die Kontur der Zwischenlage kann hierdurch an einem der Kunststoffformteile anliegen und die herausragenden Distanzelemente erzeugen zusammen mit der Materialdicke der Zwischenlage den gewünschten Abstand zu dem nächsten Kunststoffformteil.

Fig. 4 zeigt eine erste Ausführungsform des erfindungsgemäßen Stapels aus zwei Kunststoffformteilen 10 und 10' mit einer solchen Zwischenlage 50, deren Kontur im Wesentlichen der Kontur der Kunststoffformteile 10 und 10' folgt und an dem oberen Kunststoffformteil 10' anliegt. An dieser Zwischenlage 50 sind im Randbereich zwei erste Distanzelemente 51 und 52 vorgesehen, mit denen das obere Kunststoffformteil 10' so auf dem unteren Kunststoffformteil 10 aufliegt, dass das obere Kunststoffformteil 10' nicht die Dichtungsraupe 20 des unteren Kunststoffformteils 10 berührt. Auch hier sind in einem mittleren Bereich weitere zweite Distanzelemente 53 und 54 vorgesehen, die in diesem Bereich eine Stützwirkung entfalten, auch wenn hier keine Dichtungsraupe gegen Berührung zu schützen ist. Sowohl die ersten Distanzelemente 51 und 52 im Bereich der Dichtungsraupe 20, als auch die zweiten Distanzelemente 53 und 54 im mittleren Bereich können die zuvor in Fig. 3 beschriebenen Formen und Ausprägungen haben.

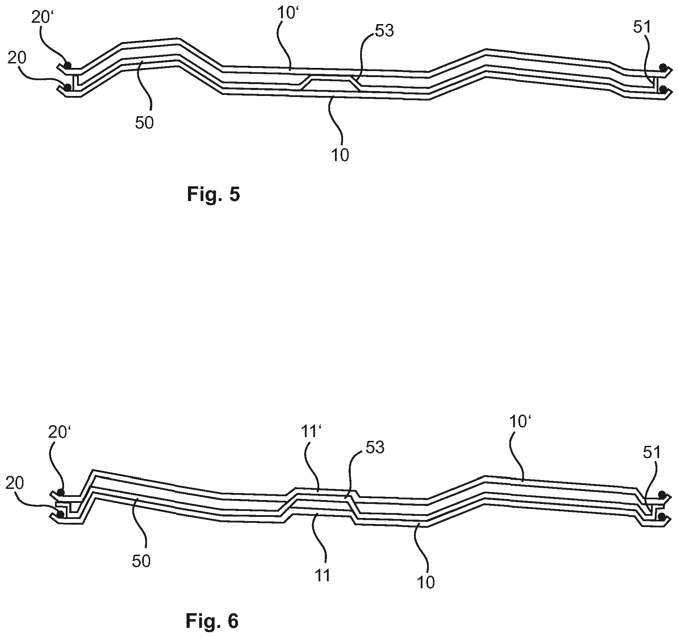

Fig. 5 zeigt eine zweite Ausführungsform des erfindungsgemäßen Stapels mit einer Zwischenlage 50 zwischen zwei Kunststoffformteilen 10 und 10', deren Randbereich selbst zu einem ersten Distanzelement 51 ausgeformt ist. Dabei liegt die Kontur der Zwischenlage 50 nun an dem unteren Kunststoffformteil 10 an, und der Randbereich der Zwischenlage 50 ist so umgeformt, dass sich ein L-förmiges Profil ergibt, auf dessen Schenkel das obere Kunststoffformteil 10' aufliegt. Der Umfang der Zwischenlage 50 muss dazu kleiner sein als der Umfang der Kunststoffformteile und insbesondere innerhalb der umlaufenden Dichtungsraupe 20 liegen. Dabei kann der Rand der Zwischenlage 50 lediglich abschnittsweise als L-Profil ausgeformt sein, d.h. einzelne Laschen sind nach oben gebogen, oder es handelt sich um ein umlaufendes Profil, so dass das obere Kunststoffformteil 10' überall auf dem Schenkel des L-förmigen Profils 51 aufliegt.

Im mittleren Bereich der Zwischenlage 50 ist in dem Beispiel der Fig. 5 ein zweites Distanzelement 53 als Stützelement ausgeformt, das die Form eines Doms bzw. einer kuppelförmigen Erhebung hat, die aus der Basiskontur der Zwischenlage 50 herausragt. So kann das obere Kunststoffformteil 10' auf diesem Dom 53 aufliegen und hängt nicht durch.

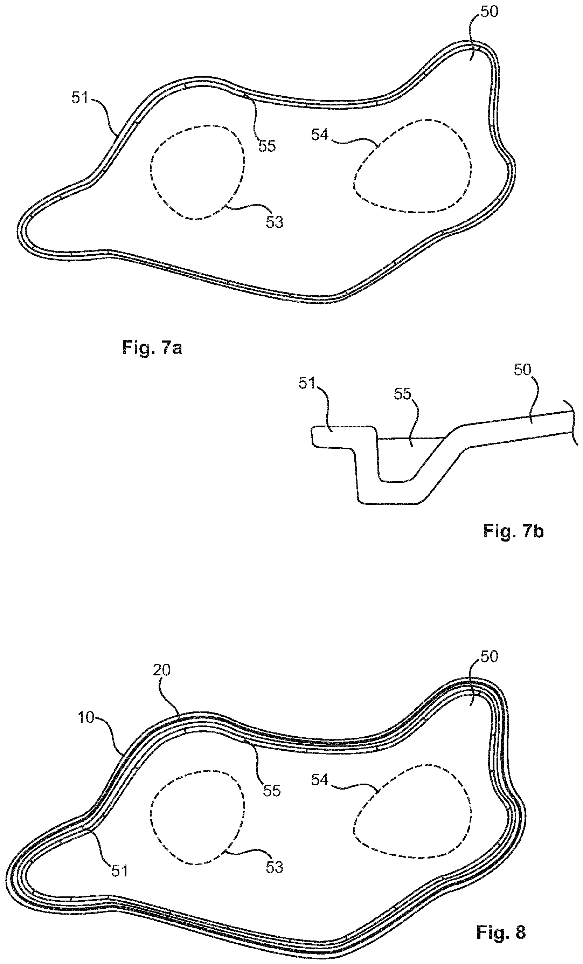

Die Position und Größe dieses zweiten Distanzelements in Form eines Doms 53 kann so gewählt werden, dass es auch eine Ausrichtung der beiden Kunststoffformteile 10 und 10' gegeneinander unterstützt. Beispielsweise ist eine solche Wirkung im Beispiel der Fig. 6 dargestellt. In dieser dritten Ausführungsform des erfindungsgemäßen Stapels ist der Randbereich der Zwischenlage 50 bedingt auch durch die Kontur der Kunststoffformteile 10 und 10' als U-förmiges Profil ausgeformt, wobei der äußere Schenkel dieses Profils nochmal nach außen umgeformt ist, um wenigstens teilweise über die Dichtungsraupe 20 hinauszuragen. Durch diese Form bildet sich eine Art Dach über der Dichtungsraupe 20 aus, welche die Dichtungsraupe 20 bei Druck von oben auf das obere Kunststoffformteil 10' schützt. Um diesem Profil mehr Stabilität zu verleihen, können die Schenkel des U-Profils durch mehrere Rippen miteinander verbunden werden, wie es auch den Figuren 7a und 7b entnehmen ist.

Ferner ist der Dom 53 als Stützelement in einem Bereich vorgesehen, in welchem eine Erhebung 11 des unteren Kunststoffformteils 10 beim direkten Stapeln in eine entsprechende Vertiefung 11' im oberen Kunststoffformteil 10' eingreifen würde, was zu einem geraden Stapel an Kunststoffformteilen führt. Da dies durch die Zwischenlage 50 verhindert wird, könnte es zu schrägen und vor allem instabilen Stapeln kommen, wenn ein oberes Kunststoffformteil 10' nur lose auf den Schenkeln des äußeren Randprofils und dem Dom 53 aufliegt. Daher ist der Dom 53 vorzugsweise so ausgeformt, dass seine Seitenfläche an der Innenfläche der Vertiefung 11' anliegt, wodurch das obere Kunststoffformteil 10' nicht nach links oder rechts verrutschen kann.

Um auch ein Verrutschen in andere horizontale Richtungen zu verhindern, kann die Seitenfläche des Dom 53 vollständig an der Innenfläche der Erhebung 11' anliegen. Dies kann auf einfache Weise insbesondere bei kreisrunden oder ovalen Domen erreicht werden. Es ist aber auch bei jeglichen anderen Formen möglich, und auch die ersten Distanzelemente im Bereich der Dichtungsraupen können so ausgebildet und positioniert sein, dass sie diese Ausrichtung ermöglichen. Beispielsweise bewirken im Ausführungsbeispiel der Fig. 6 auch die innen liegenden Schenkel des U-Profils 51 im Randbereich der Zwischenlage 50 eine direkte Ausrichtung der Zwischenlage 50 gegenüber den Kunststoffformteilen 10, 10' und damit indirekt auch der Kunststoffformteile untereinander.

Die Kontur der Zwischenlage 50 folgt somit im Wesentlichen der Kontur der Kunststoffformteile 10, 10' verstärkt bzw. erhöht diese jedoch insbesondere im Bereich von Vertiefungen und Erhebungen, um über die Zwischenlage 50 wieder einen indirekten Formschluss zwischen den beiden Kunststoffformteilen herzustellen. Dieser Dom 53 oder andere Elemente können ein Verrutschen in mehrere horizontale Richtungen verhindern, so dass eine Zwischenlage auf ein unteres Kunststoffformteil aufgelegt werden kann und automatisch in die richtige Position rutscht. Das Gleiche gilt dann für das nächste Kunststoffformteil, das auf diese Zwischenlage aufgelegt wird.

Fig. 7a zeigt eine Aufsicht auf ein Beispiel einer Zwischenlage mit einem umlaufenden Rand in Form eines U-Profils. Die Schenkel des Profils werden dabei durch mehrere Rippen 55 miteinander verbunden, so dass die Schenkel des Profils bei Druck von oben nicht auseinander gedrückt werden. Dies ist vergrößert auch für eine Rippe 55 in der Ansicht der Fig. 7b dargestellt. Ebenfalls erkennbar sind in Fig. 7a mehrere zweite Distanzelemente 53 und 54 in Form von gestrichelt dargestellten Domen.

Fig. 8 zeigt in einer Aufsicht ein unteres Kunststoffformteil 10 mit einer umlaufenden Kleberaupe 20, auf welches eine Zwischenlage 50 aufgelegt wurde. Dabei ist der Umfang der Zwischenlage 50 kleiner als der Umfang des Kunststoffformteils 10, und die Zwischenlage 50 liegt insbesondere innerhalb eines durch die umlaufende Kleberaupe 20 begrenzten Bereichs, so dass die Zwischenlage 50 nicht über die Kleberaupe 20 hinausragt.

Um die Zwischenlagen in einem Stapel von den Kunststoffformteilen zu unterscheiden, können diese andersfarbig sein. Ferner können an der Zwischenlage auch Griffelemente ausgeformt sein, um eine Zwischenlage sicher auf ein Kunststoffformteil zu legen oder es zu entnehmen, ohne dabei die Kleberaupe des Kunststoffformteils zu berühren. Darüber hinaus kann es vorgesehen sein, dass an der Zwischenlage 50 Mittel ausgeformt sind, um den Stapel aus Kunststoffformteilen sicher zu lagern und/oder zu transportieren. Beispielsweise kann es sich hierbei um Ösen oder Aussparungen im Randbereich der Zwischenlage handeln, durch welche Befestigungsbänder gezogen werden können, mit denen die Kunststoffformteile verzurrt werden. Hierzu wäre es vorteilhaft, wenn die Zwischenlage außen über die Kunststoffformteile hinausragt.

### Bezugszeichenliste:

- 10,10': Kunststoffformteil, Aggregatträger, Schallisolierung
- 11,11',12,12': Erhebung, Vertiefung
- 13: Randerhebung
- 20,20': Dichtung, Kleberaupe, Dichtungsraupe
- 30: Kraftfahrzeugtür
- 31: Türaußenblech
- 32: Türinnenblech, Fahrzeugbauteil
- 33: Innenverkleidung
- 34: Nassraum
- 35: Trockenraum
- 40,41: Befestigung
- 50: Zwischenlage
- 51,51',52,52': Erstes Distanzelement, L-Profil, U-Profil
- 53,53',54,54': Zweites Distanzelement, Stützelement, Dom
- 55: Rippe

## Patentansprüche

1. Stapel aus wenigstens zwei identisch geformten, flächigen Kunststoffformteilen (10;10') mit einer Kontur, die durch wenigstens eine Erhebung gebildet wird, die auf der anderen Seite eines jeweiligen Kunststoffformteils (10;10') eine entsprechende Vertiefung ausbildet, wobei am Rand jedes Kunststoffformteils (10;10') wenigstens eine umlaufende Kleberaupe (20;20') angebracht ist, mit welcher die Kunststoffformteile (10;10') jeweils bei Anbringung an einem Fahrzeugbauteil (32) gegenüber diesem abdichtbar sind, wobei zwischen den wenigstens zwei Kunststoffformteilen (10;10') eine Distanzeinrichtung angeordnet ist, die wenigstens zwei Distanzelemente (51;51';52;52';53;53';54;54') aufweist und so ausgebildet und zwischen den zwei Kunststoffformteilen (10;10') positioniert ist, dass die Distanzelemente (51;51';52;52';53;53'; 54;54') in Kontakt zu beiden Kunststoffformteilen (10;10') stehen, und Höhe, Form und/oder Anordnung der wenigstens zwei Distanzelemente (51;51';52;52';53;53';54;54') so gewählt sind, dass sich die beiden Kunststoffformteile (10;10') nicht berühren, und die Kleberaupe (20) eines unteren Kunststoffformteils (10) nicht das darüber gestapelte Kunststoffformteil (10') berührt, wobei wenigstens ein erstes Distanzelement (51;51';52;52') in einem Außenbereich der Kunststoffformteile (10;10') nahe der Kleberaupe (20;20') liegt, während wenigstens ein zweites Distanzelement (53;53';54;54') in einem mittleren Bereich der Kunststoffformteile (10;10') liegt, wobei die Distanzeinrichtung mit den wenigstens zwei Distanzelementen (51;51';52;52';53;53';54;54') ein separates Bauteil ist, das als Zwischenlage (50) zwischen den zwei Kunststoffformteilen (10;10') eingebracht ist,
**dadurch gekennzeichnet, dass**
die Zwischenlage (50) eine Kontur aufweist, die der Kontur der gestapelten Kunststoffformteile (10;10') entspricht, so dass die Erhebung(en)/Vertiefung(en) der Zwischenlage (50) der (den) Erhebung(en)/Vertiefung(en) der gestapelten Kunststofformteile (10; 10') entsprechen, dass die wenigstens zwei Distanzelemente (51;51';52;52';53;53';54;54') aus dieser Kontur herausragen, und dass der durch Einbringung der Distanzeinrichtung erzeugte Abstand zwischen den beiden Kunststoffformteilen (10;10') wenigstens der Summe aus der Materialdicke der Zwischenlage (50) und der Höhe der aus der Kontur herausragenden Distanzelemente (51;51';52;52'; 53;53';54;54') entspricht.

2. Stapel nach Anspruch 1,
**dadurch gekennzeichnet, dass** die Distanzelemente (51;51';52; 52';53;53';54;54') als Steg, Stift, Rippe, Profil oder Kombinationen davon ausgebildet sind.

3. Stapel nach einem oder beiden der Ansprüche 1 und 2,
**dadurch gekennzeichnet, dass** der durch die Distanzeinrichtung erzeugte Abstand zwischen den beiden Kunststoffformteilen (10;10') über die Kontur der Kunststoffformteile (10;10') annähernd konstant ist.

4. Stapel nach einem oder mehreren der Ansprüche 1 bis 3,
**dadurch gekennzeichnet, dass** der Umfang der Zwischenlage (50) kleiner ist als der Umfang der Kunststoffformteile (10;10'), und die Zwischenlage (50) mittig zwischen zwei Kunststoffformteilen (10;10') eingebracht ist und dabei nicht nach außen über eine Kleberaupe (20;20') hinausragt.

5. Stapel nach einem oder mehreren der Ansprüche 1 bis 4,
**dadurch gekennzeichnet, dass** das wenigstens eine erste Distanzelement (51;51';52;52') so innerhalb des durch die umlaufende Kleberaupe (20;20') gebildeten Bereichs eines Kunststoffformteils (10;10') liegt, dass die Zwischenlage (50) nach außen über eine Kleberaupe (20;20') hinausragt, ohne sie zu berühren.

6. Stapel nach einem oder mehreren der Ansprüche 1 bis 5,
**dadurch gekennzeichnet, dass** am Außenrand der Zwischenlage (50) mehrere erste Distanzelemente (51;51';52;52') in Form von Stegen und/oder Stiften ausgeformt sind.

7. Stapel nach einem oder mehreren der Ansprüche 1 bis 6,
**dadurch gekennzeichnet, dass** ein erstes Distanzelement (51;51';52;52') dadurch gebildet ist, dass der Außenrand der Zwischenlage (50) als L-förmiges oder U-förmiges Profil ausgeformt ist.

## Claims

1. A stack of at least two identically formed, flat plastic molded parts (10; 10') having a contour formed by at least one raised portion, which forms a corresponding depression on the other side of a respective plastic molded part (10; 10'), wherein at least one peripheral adhesive bead (20; 20'), with which the plastic molded parts (10; 10'), upon being attached to a vehicle component (32), can each be sealed against the latter, is applied on the edge of each plastic molded part (10; 10'), wherein a spacing device is disposed between the at least two plastic molded parts (10; 10'), which comprises at least two spacer elements (51; 51'; 52; 52'; 53; 53'; 54; 54') and is configured and positionable between the two plastic molded parts (10; 10') in such a way that the spacer elements (51; 51'; 52; 52'; 53; 53'; 54; 54') are in contact with both plastic molded parts (10; 10'), and the height, shape and/or arrangement of the at least two spacer elements (51; 51'; 52; 52'; 53; 53'; 54; 54') are selected in such a way that the two plastic molded parts (10; 10') do not touch each other, and the adhesive bead (20) of a lower plastic molded part (10) does not touch the plastic molded part (10') stacked above it, wherein at least one first spacer element (51; 51'; 52; 52') is located in an outer region of the plastic molded parts (10; 10') close to the adhesive bead (20; 20'), whereas at least one second spacer element (53; 53'; 54; 54') is located in a central region of the plastic molded parts (10; 10'), wherein the spacing device comprising the at least two spacer elements (51; 51'; 52; 52'; 53; 53'; 54; 54') is a separate component which can be inserted as an intermediate layer (50) between two plastic molded parts (10; 10'),
**characterized in that**
the intermediate layer (50) has a contour corresponding to the contour of the stacked plastic molded parts (10; 10') to be stacked, so that the raised portion(s)/depression(s) of the intermediate layer (50) correspond to the raised portion(s)/depression(s) of the stacked plastic molded parts (10; 10'), that the at least two spacer elements (51; 51'; 52; 52'; 53; 53'; 54; 54') protrude from this contour, and that the distance between the two plastic molded parts (10; 10') created by introducing the spacing device corresponds at least to the sum of the material thickness of the intermediate layer (50) and the height of the spacer elements (51; 51'; 52; 52'; 53; 53'; 54; 54') protruding from the contour.

2. The stack according to claim 1,
**characterized in that** the spacer elements (51; 51'; 52; 52'; 53; 53'; 54; 54') are configured as a web, pin, rib, profile or combinations thereof.

3. The stack according to any one or both of the claims 1 and 2,
**characterized in that** the distance between the two plastic molded parts (10; 10') produced by the spacing device is approximately constant over the contour of the plastic molded parts (10; 10').

4. The stack according to any one or several of the claims 1 to 3,
**characterized in that** the circumference of the intermediate layer (50) is smaller than the circumference of the plastic molded parts (10; 10'), and the intermediate layer (50) is introduced centrally between two plastic molded parts (10; 10') and does not protrude outwards over an adhesive bead (20; 20').

5. The stack according to any one or several of the claims 1 to 4,
**characterized in that** the at least one first spacer element (51; 51'; 52; 52') is located within the region of a plastic molded part (10; 10') formed by the peripheral adhesive bead (20; 20') in such a way that the intermediate layer (50) protrudes outwards over an adhesive bead (20; 20') without touching it.

6. The stack according to any one or several of the claims 1 to 5, **characterized in that** several first spacer elements (51; 51'; 52; 52') in the form of webs and/or pins are formed on the outer edge of the intermediate layer (50).

7. The stack according to any one or several of the claims 1 to 6,
**characterized in that** a first spacer element (51; 51'; 52; 52') is formed by the outer edge of the intermediate layer (50) being configured as an L-shaped or U-shaped profile.

## Revendications

1. Pile d'au moins deux pièces moulées en matière plastique (10; 10') planes de forme identique et ayant un contour qui est formé par au moins une saillie qui forme un creux correspondant sur l'autre face d'une pièce moulée de matière plastique (10; 10') respective, sur le bord de chaque pièce moulée en matière plastique (10; 10') étant appliquée au moins une chenille de colle (20; 20') périphérique au moyen de laquelle les pièces moulées en matière plastique (10; 10') peuvent être étanchées par rapport à un composant de véhicule (32) lorsqu'elles sont montées sur celui-ci, dans laquelle un dispositif d'écartement est disposé entre lesdites au moins deux pièces moulées en matière plastique (10; 10'), qui comprend au moins deux éléments d'écartement (51; 51'; 52; 52'; 53; 53'; 54; 54') et est réalisé et positionné entre les deux pièces moulées en matière plastique (10; 10') de telle sorte que les éléments d'écartement (51; 51'; 52; 52'; 53; 53'; 54; 54') sont en contact avec les deux pièces moulées en matière plastique (10; 10'), et la hauteur, la forme et/ou la disposition desdits au moins deux éléments d'écartement (51; 51'; 52; 52'; 53; 53'; 54; 54') sont choisies de telle manière que les deux pièces moulées en matière plastique (10; 10') ne se touchent pas et que la chenille de colle (20) d'une pièce moulée en matière plastique (10) inférieure ne touche pas la pièce moulée en matière plastique (10') empilée là-dessus, dans laquelle au moins un premier élément d'écartement (51; 51'; 52; 52') est situé dans une zone extérieure des pièces moulées en matière plastique (10; 10') près de la chenille de colle (20; 20'), tandis qu'au moins un deuxième élément d'écartement (53; 53'; 54; 54') est situé dans une zone centrale des pièces moulées en matière plastique (10; 10'), dans laquelle le dispositif d'écartement avec lesdits au moins deux éléments d'écartement (51; 51'; 52; 52'; 53; 53'; 54; 54') constitue un composant séparé qui est intercalé en tant que couche intermédiaire (50) entre les deux pièces moulées en matière plastique (10; 10'),
**caractérisée par le fait que**
ladite couche intermédiaire (50) présente un contour qui correspond au contour des pièces moulées en matière plastique (10; 10') empilées de sorte que la (les) saillie(s)/creux de la couche intermédiaire (50) correspondent à la (aux) saillie(s)/creux des pièces moulées en matière plastique (10; 10') empilées, que lesdits au moins deux éléments d'écartement (51; 51'; 52; 52'; 53; 53'; 54; 54') dépassent ce contour, et que la distance entre les deux pièces moulées en matière plastique (10; 10') qui est créée en intercalant le dispositif d'écartement correspond au moins à la somme de l'épaisseur de matière de la couche intermédiaire (50) et de la hauteur des éléments d'écartement (51; 51'; 52; 52'; 53; 53'; 54; 54') dépassant le contour.

2. Pile selon la revendication 1,
**caractérisée par le fait que** les éléments d'écartement (51; 51'; 52; 52'; 53; 53'; 54; 54') sont réalisés en tant qu'entretoise, broche, nervure, profil ou combinaisons de ceux-ci.

3. Pile selon l'une ou les deux des revendications 1 et 2,
**caractérisée par le fait que** la distance entre les deux pièces moulées en matière plastique (10; 10') qui est créée par le dispositif d'écartement est approximativement constante sur le contour des pièces moulées en matière plastique (10; 10').

4. Pile selon l'une ou plusieurs des revendications 1 à 3,
**caractérisée par le fait que** la circonférence de la couche intermédiaire (50) est plus petite que la circonférence des pièces moulées en matière plastique (10; 10'), et la couche intermédiaire (50) est insérée de manière centrale entre deux pièces moulées en matière plastique (10; 10') tout en ne faisant pas saillie vers l'extérieur d'une chenille de colle (20; 20').

5. Pile selon l'une ou plusieurs des revendications 1 à 4,
**caractérisée par le fait que** ledit au moins un premier élément d'écartement (51; 51'; 52; 52') est situé de telle manière à l'intérieur de la zone d'une pièce moulée en matière plastique (10; 10'), formée par la chenille de colle (20;20') périphérique, que la couche intermédiaire (50) fait saillie vers l'extérieur d'une chenille de colle (20;20') sans toucher celle-ci.

6. Pile selon l'une ou plusieurs des revendications 1 à 5,
**caractérisée par le fait que** sur le bord extérieur de la couche intermédiaire (50) est formée une pluralité de premiers éléments d'écartement (51; 51'; 52; 52') sous forme d'entretoises et/ou de broches.

7. Pile selon l'une ou plusieurs des revendications 1 à 6,
**caractérisée par le fait qu'**un premier élément d'écartement (51; 51'; 52; 52') est formé **par le fait que** le bord extérieur de la couche intermédiaire (50) est réalisé en tant que profilé en L ou en U.
